(19) Europäisches Patentamt
European Patent Office
Office européen des brevets

(11) EP 2 158 511 B1

(12) FASCICULE DE BREVET EUROPEEN

(45) Date de publication et mention de la délivrance du brevet:
**28.11.2012 Bulletin 2012/48**

(51) Int Cl.:
*G02B 23/12* (2006.01)   *G02B 15/173* (2006.01)
*G02B 13/14* (2006.01)

(21) Numéro de dépôt: 08760292.6

(22) Date de dépôt: **30.05.2008**

(86) Numéro de dépôt international:
**PCT/EP2008/056705**

(87) Numéro de publication internationale:
**WO 2008/145735 (04.12.2008 Gazette 2008/49)**

(54) **CAMERA INFRAROUGE COMPORTANT UN ZOOM OPTIQUE DE GRAND RAPPORT**

INFRAROTKAMERA MIT EINEM OPTISCHEN ZOOM FÜR GROSSE VERHÄLTNISSE UND ENTSPRECHENDES VERFAHREN ZUM BEOBACHTEN EINER SZENE

INFRARED CAMERA COMPRISING AN OPTICAL ZOOM OF LARGE RATIO AND CORRESPONDING METHOD OF OBSERVING A SCENE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.05.2007 FR 0755341**

(43) Date de publication de la demande:
**03.03.2010 Bulletin 2010/09**

(73) Titulaire: **Sagem Défense Sécurité
75015 Paris (FR)**

(72) Inventeurs:
• **COLENTIER, Sylvie
F-75015 Paris (FR)**
• **DUVAL, Frédéric
F-75015 Paris (FR)**

(74) Mandataire: **Callon de Lamarck, Jean-Robert et al
Cabinet Regimbeau
20 rue de Chazelles
75847 Paris cedex 17 (FR)**

(56) Documents cités:
**WO-A-01/76261     JP-A- 2002 014 283
US-A- 6 091 551**

**Description**

DOMAINE TECHNIQUE GENERAL

La présente invention concerne une caméra infrarouge comportant un zoom optique.
Elle concerne également un procédé d'observation d'une scène avec une telle caméra.

ETAT DE L'ART

Les caméras infrarouges opérant dans les bandes spectrales 3 à 5 $\mu$m ou 8 à 12 $\mu$m intègrent généralement des optiques à deux champs optiques.
Un grand champ optique est utilisé pour détecter les cibles. Pour permettre une bonne anticipation, le meilleur compromis [angle de vue/résolution] est visé (typiquement de l'ordre de 10°).
Le petit champ optique (typiquement de l'ordre de 1°) est utilisé pour l'identification des cibles, voire la conduite de tir dans certaines applications.
Certaines caméras, en particulier pour des applications aéronautiques, intègrent un troisième champ entre 20° et 40°, utilisé pour le pilotage.
Le passage d'un champ à l'autre, qui s'opère par basculement dans le chemin optique de groupes de lentilles, s'accompagne d'une perte temporaire de l'image pour l'opérateur.
Pour des raisons d'encombrement et de complexité mécanique, les objectifs multichamps ne peuvent guère offrir plus de trois champs optiques.
Des champs supplémentaires peuvent être obtenus par zoom électronique mais sans gain de résolution par rapport au champ optique courant.
Les caméras infrarouges doivent en outre permettre une mise au point variable dans une zone définie de l'infini à quelques dizaines de mètres de l'objectif de la caméra. Cette zone s'appelle la zone de mise au point. Si l'objet à observer est hors de la zone de mise au point, en étant ainsi plus prêt de l'objectif, il n'est pas possible de former une image nette de l'objet sur un détecteur de la caméra. En revanche, si l'objet à observer est dans la zone de mise au point, l'image de l'objet formée sur le détecteur doit être conservée nette lors d'un changement de champ.
L'ensemble des fonctionnalités et performances optiques (champs, distance de focalisation, résolution par exemple) doivent de plus être garanties sur un domaine thermique opérationnel le plus étendu possible, de façon transparente pour l'utilisateur.
Pour pouvoir assurer la variation continue du champ tout en conservant la mise au point, et pour différentes températures de fonctionnement, les caméras infrarouges possèdent un zoom optique comportant classiquement deux motorisations qui déplacent trois groupes optiques mobiles. Deux groupes mobiles sont déplacés ensemble par l'intermédiaire d'une came mécanique pour assurer la variation continue de focale pour une mise au point à l'infini et à une température moyenne (typiquement 20°C). Un troisième groupe optique motorisé indépendamment permet de modifier la mise au point et de compenser l'évolution de la température.
On connaît par ailleurs par les publications US 6 091 551 A ou JP 2002-014283 une caméra selon le préambule de la revendication 1.
En revanche JP 2002-014283 ne traite pas de la conservation de la mise au point lorsque le champ varie.
De plus une telle caméra possède un certain nombre de groupes optiques mobiles, mais leur loi de déplacement et la détermination de leurs positions relatives sont complexes. Les lois de déplacement des groupes optiques mobiles sont complexes, ce qui complexifie le pilotage des groupes.

PRESENTATION DE L'INVENTION

L'invention propose de pallier au moins un de ces inconvénients.
A cet effet, l'objectif de la caméra est constitué par un module modificateur qui forme d'un plan objet situé dans la zone de mise au point dans la scène (c'est-à-dire un plan objet qui est situé à l'infini ou à une distance de l'ordre de grandeur de la dizaine de mètres par rapport à l'objectif) une image intermédiaire à l'infini.
Lorsque le plan objet est situé à l'infini (ou une distance très grande par rapport à l'objectif) dans la zone de mise au point, le module modificateur constitue un module sensiblement « afocal » de grossissement variable.
On comprend que la distance de mise au point est opérationnellement ajustable entre l'infini et quelques dizaines de mètres de l'objectif, ce qui correspond à la zone de mise au point.
L'image d'une scène en sortie du module modificateur est ensuite conjuguée sur une matrice d'un détecteur infrarouge par un module imageur de focale fixe.
Ainsi, l'objectif selon l'invention donne toujours une image nette, sur le détecteur, d'un plan objet situé dans la zone de mise au point, et conserve une image nette lorsque la distance focale de la caméra (c'est-à-dire son champ) varie.

L'ensemble des deux modules constitue donc un objectif de focale variable, et de distance de mise au point variable.

Le module modificateur est préférentiellement constitué par trois groupes : un groupe frontal convergent fixe, un groupe mobile divergent et un groupe mobile convergent.

Le fait que le module modificateur soit « afocal » selon la définition ci-dessus permet, avec deux groupes mobiles seulement,

- d'ajuster la mise au point entre l'infini et une distance de quelque dizaines de mètres, et de maintenir cette mise point alors que

  o la focale varie continûment dans un grand rapport (typiquement supérieur à 15) et
  o la température ambiante évolue

- d'améliorer le découplage des fonctions de chaque groupe optique composant le module ; et
- d'éviter la présence de zones mortes dans l'image sur toute la plage de distances focales de la caméra.

Contrairement à l'art antérieur, les déplacements des deux groupes motorisés sont calculés par des lois polynomiales simples en fonction des trois variables indépendantes : focale, distance de mise au point, et température.

La fonction assurée par la came mécanique dans l'art antérieur, difficile à réaliser mécaniquement, peut alors avantageusement être remplacée par un traitement numérique très simple à réaliser.

On propose ainsi selon l'invention une caméra selon la revendication 1.

L'invention est avantageusement complétée par les caractéristiques des revendications 2 à 8.

L'invention présente de nombreux avantages.

La variation de focale, la focalisation (à l'infini ou à une distance finie inférieure à l'hyperfocale), ainsi que l'indépendance de comportement vis à vis de la température (athermalisation), sont assurées par le déplacement du groupe optique divergent (également appelé le variateur) et du groupe optique convergent (également appelé le compensateur).

Les fonctions respectives des deux groupes mobiles précités sont découplées, notamment grâce au fait que le module modificateur est « afocal » selon la définition ci-dessus. Le déplacement du groupe optique divergent (le variateur) permet de faire varier la distance focale de la caméra. Le déplacement du groupe optique convergent (le compensateur) permet de maintenir l'image focalisée sur un plan de focalisation fixe, à savoir matrice du détecteur, lorsque la température ambiante varie et lorsque la focale varie.

Les déplacements des groupes en fonction du champ, de la distance de focalisation et de la température de fonctionnement sont régis par des lois mathématiques simples, compatibles d'un traitement numérique en temps réel. Cette propriété permet un pilotage par asservissements numériques à partir de deux motorisations indépendantes, et l'implantation de fonctionnalités valorisantes au niveau de la caméra, telle qu'une fonction de télémétrie intégrée. En effet :

- La position du variateur est calculable à partir d'un polynôme au moins d'ordre 1, en fonction de l'inverse de la focale. Les coefficients de ce polynôme sont linéairement dépendants de la température.
- La position relative du compensateur par rapport à la position du variateur est calculable à partir d'un polynôme au moins d'ordre 1 en fonction de la focale. Les coefficients de ce polynôme sont linéairement dépendants de la température et de l'inverse de la distance de focalisation.

Les polynômes sont très avantageusement au plus d'ordre 4.

Chaque groupe optique mobile, intégré dans une mécanique de déplacement/guidage associée à un dispositif de recopie de position, est piloté par une électronique d'asservissement numérique. L'asservissement est réalisé en vitesse ou en position sur les consignes calculées à partir des lois polynomiales décrites ci-dessus

Les lois de positionnements sont inversibles très facilement et permettent de fournir en temps réel une recopie numérique précise de la position de focale (précision avec une erreur inférieure à 1%) et de la distance de focalisation courante (précision avec une erreur inférieure à 2%).

L'objectif de la caméra constitue donc un zoom optique à focale continûment variable, permettant de couvrir, sans perte d'image (c'est-à-dire sans zone morte dans l'image, grâce au fait que le module modificateur est afocal selon la définition ci-dessus), les plages de champs opérationnels comprises par exemple entre 1 et 40°, voire plus, dans une bande infrarouge, par exemple la bande 3-5 $\mu$m.

Le fonctionnement du zoom de la caméra ne dépend pas de la température, au moins dans la plage sensiblement égale à [-40°C ; 70°C]. Selon un exemple de réalisation ne faisant pas partie de l'invention, ce groupe frontal du zoom est constitué de deux lentilles convergentes. La lentille extérieure est sphérique, préférentiellement en ZnS. Ce matériau est choisi en tant qu'élément en contact avec l'environnement externe à la caméra pour sa durabilité vis à vis de l'environnement climatique et mécanique. La lentille interne est asphéro-diffractive, préférentiellement en ZnSe. La combinaison ZnS/ZnSe assure une très faible sensibilité aux gradients thermiques pouvant exister entre les deux lentilles (conservation de la qualité optique).

Selon un exemple de réalisation ne faisant pas partie de l'invention, la caméra a un grand rapport de distances focales (typiquement supérieur à x10, voire supérieur à x20).

L'encombrement spatial de la caméra est modulable en fonction d'un volume mécanique alloué pour chaque application.

Dans l'application développée, le rapport de focales de x20, sur la plage de température de [-40°C, +70°C], est obtenu avec une course mécanique du variateur de 55 mm et une course du compensateur inférieure à 40 mm.

Le chemin optique peut être coudé en U, grâce à deux miroirs, de manière à implanter au moins les deux groupes mobiles dans la longueur du premier bras optique. La longueur du plus long bras de l'optique est environ égale à la moitié de la focale maximale du zoom.

L'un des miroirs peut être motorisé ou monté sur cales piézoélectrique pour déplacer de façon dynamique l'axe optique (stabilisation d'axe, sur-échantillonnage, etc.).

Le déplacement dynamique de l'axe optique peut également être assuré par une lame plane à faces parallèles inclinée, mobile en rotation autour de l'axe optique. La lame peut être interposée entre le dernier groupe de lentilles du module imageur et la fenêtre d'entrée d'un cryostat dans lequel est placé le détecteur. L'inclinaison et l'épaisseur de la lame sont choisies pour créer un décalage de l'axe optique équivalent à un ½ pixel du détecteur. Ceci est un dispositif de microbalayage permettant d'augmenter la résolution de l'image.

La caméra a une ouverture numérique constante sur toute la plage de focales. L'ouverture numérique est égale à F/4 dans l'application développée.

Le diaphragme d'ouverture est situé dans l'espace image (matérialisé par l'écran refroidi du détecteur).

Le diaphragme d'ouverture est conjugué sur le groupe frontal pour la plus longue focale F de la caméra. La conjugaison minimise alors le diamètre, la masse et le coût de réalisation du groupe frontal.

La conjugaison du diaphragme sur le groupe frontal conduit à un rapport de la focale du groupe optique constitué des lentilles 41 et 42 sur la focale du groupe 43 ayant une valeur supérieure à 4.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La Fig. 1 est un schéma optique fonctionnel d'un objectif à focale variable, servant d'illustration aux rappels théoriques utiles à la compréhension de l'invention ;
- La Fig. 2 est un graphe montrant les positions de L2 et de L30 par rapport à L1, visibles à la figure 1, en fonction de la distance focale de l'objectif de la figure 1 ;
- Les Fig. 3A à 3C sont des graphes conformes au graphe de la figure 2, pour respectivement une température de -40°C, +20°C et +70°C ;
- La Fig. 4 est un schéma optique fonctionnel d'une caméra selon l'invention ;
- La Fig. 5 est un schéma optique fonctionnel, en lentilles réelles en longue focale, d'une caméra selon l'invention ;
- Les Fig. 6A à 6E sont des schémas conformes à celui de la figure 5, pour différentes positions des groupes optiques
- La Fig. 7 est un graphe montrant la course des deux groupes optiques en fonction du champ.

DESCRIPTION DETAILLEE

RAPPELS THEORIQUES

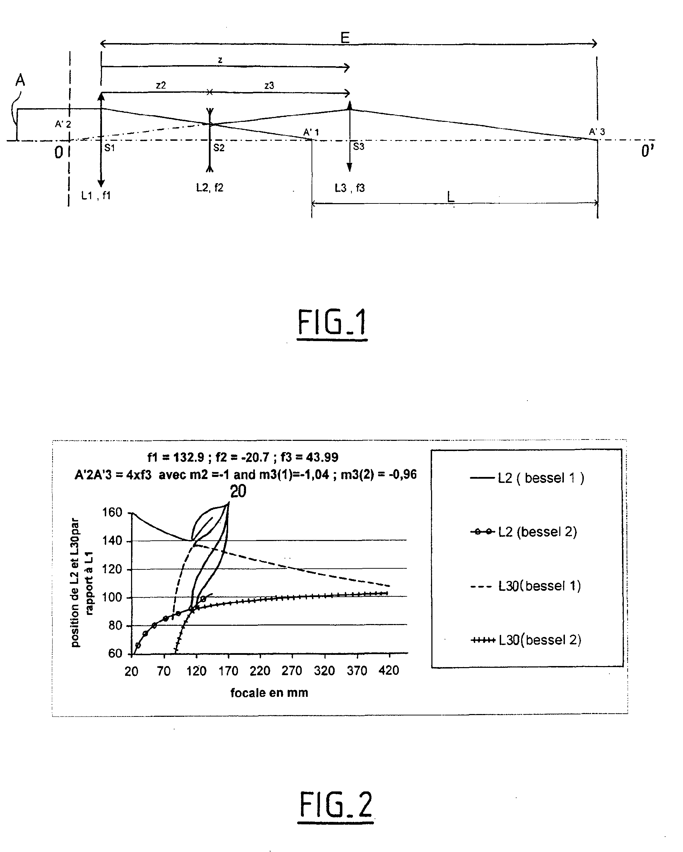

Comme le montre schématiquement la figure 1, un objectif à focale variable destiné à former une image, dans un plan focal fixe, d'objets éloignés - par exemple situés entre quelques dizaines de mètres et l'infini - est constitué au moins de trois groupes de lentilles, notés respectivement L1, L2 et L30, dont deux au minimum (L2 et L30) sont mobiles en translation suivant l'axe optique OO'. Les groupes L1 et L30 sont convergents, tandis que le groupe L2 est divergent.

L'objet A, le plan focal image A'3 de la caméra et le plan focal image A'1 du groupe frontal L1 sont fixes.

Or, le déplacement du groupe L2 déplace le plan image A'2, conjugué de A'1. Le groupe L30 doit donc également être déplacé pour maintenir la conjugaison entre le plan A'2 et le plan image fixe A'3. La position de L30 est donc assujettie à celle de L2.

Un grandissement $m_2(z_2)$, variable en fonction de la position $z_2$ de L2 sur l'axe OO', est associé à la conjugaison optique A'1/A'2.

Un grandissement $m_3(z_3)$, variable en fonction de la position $z_3$ de L30 sur l'axe OO', est associé à la conjugaison optique A'2/ A'3.

La focale de l'objectif varie avec les positions z2 et z3 des groupes L2 et L30 selon l'expression suivante :

$$F(t_2) = f_1 \cdot m_2(z_2) \cdot m_3(z_3) \qquad \text{(Equ 1)}$$

Dans cette expression, f1 est la focale du groupe frontal L1, qui est fixe sur l'axe OO'.

Cependant, la conjugaison optique est réalisable si les conditions de Bessel sont satisfaites par L30, à savoir que la distance A'2A'3 doit être supérieure à quatre fois la focale du groupe L30.

La distance A'2A'3 dépend de la position du groupe L2.

$$A'_2 A'_3(m2) = E - f_1 - f_2 \cdot (2 - \frac{1}{m_2} - m_2) \qquad \text{(Equ 2)}$$

$A'_2 A'_3$ (m2) est minimale pour m2 = -1, ce qui donne

$$A'_2 A'_3(-1) = E - f_1 - 4 f_2$$

L'absence de zone morte dans la plage de focales à couvrir est conditionnée par la relation :

$$E \geq f_1 + 4 \cdot (f_3 + f_2) \qquad \text{(Equ 3)}$$

Lorsque la condition de Equ 3 est remplie, pour chaque position du groupe L2 (autrement dit pour chaque valeur de m2), il existe deux positions possibles de L30 permettant de conjuguer les plans A'2 et A'3 avec un grandissement respectivement de m3 et 1/m3.

Comme l'illustre la figure 2 sur un exemple numérique, une plage étendue de focales est accessible, moyennant des discontinuités 20 dans les courses des groupes mobiles, ce qui complexifie le pilotage des groupes, voire le rend infaisable. Comme on l'a dit, lorsque Equ 3 est vérifiée, à chaque position m2 de L2 correspond deux positions de L30 qui conjuguent A'2 et A'3, avec des grossissements respectivement supérieur à 1 (position notée Bessel 1) et inférieur à 1 (Bessel 2). On transpose cette dénomination Bessel 1 et Bessel 2 au couple de positions L2/L30 sur le graphique de la figure 2 représentant la position des deux groupes en fonction de la focale du zoom complet ainsi atteinte.

La focale de la caméra, minimale ou maximale, accessible sans discontinuité est environ égale à la focale du groupe L1 (la discontinuité correspond à m2 = -1 et m3 ≈ 1).

Pour garantir la faisabilité du calcul optique, la focale minimale du groupe L1 est environ supposée égale à la pupille maximale de sortie de la caméra (en effet, la correction des aberrations devient difficile pour une ouverture locale supérieure à F/1 sur le groupe L1).

Le ratio maximal de focales accessibles sans discontinuité est donc égal au nombre d'ouverture de la caméra.

Dans l'exemple proposé à la figure 2, la focale maximale visée est 420 mm, avec une ouverture de F/4. On constate sur les courbes de la figure 2 que la focale minimale accessible sans discontinuité est effectivement de 110 mm environ.

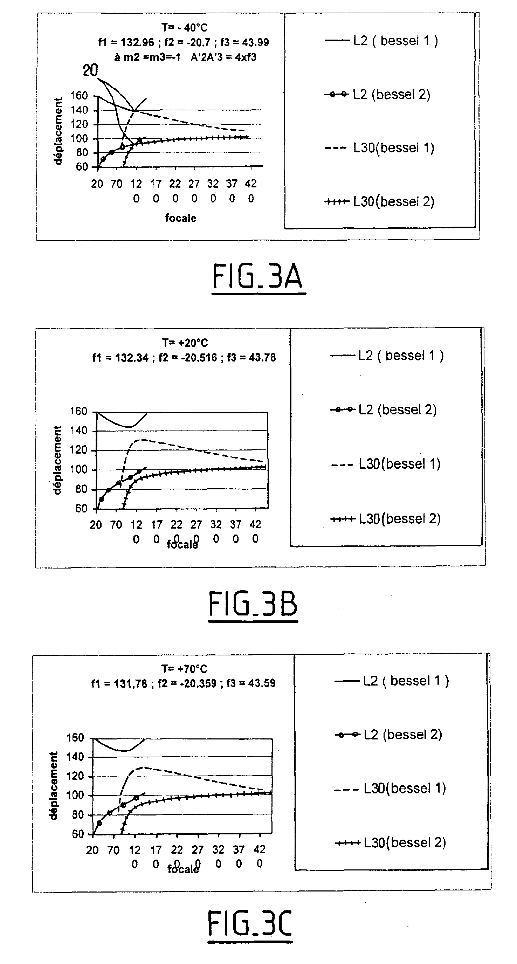

Les discontinuités de courses sont éliminées dans le cas particulier où les groupes L2 et L30 passent par un grandissement -1 et 1 en même temps. Cependant, cette configuration, qui correspond à une distribution particulière de focales, ne peut être réalisée que pour une seule valeur de température. Or, comme le montrent les figures 3A à 3C, sur une plage de températures de fonctionnement de caméra infrarouge (typiquement -40°C à +70°C), les discontinuités 20 doivent être importantes à une des bornes de température - par exemple -40°C, voir figure 3A - pour éviter les zones mortes à l'autre borne - par exemple +70°C, voir figure 3C - , compte tenu de l'évolution des focales des groupes en fonction de la température.

## PRINCIPE DE L'INVENTION

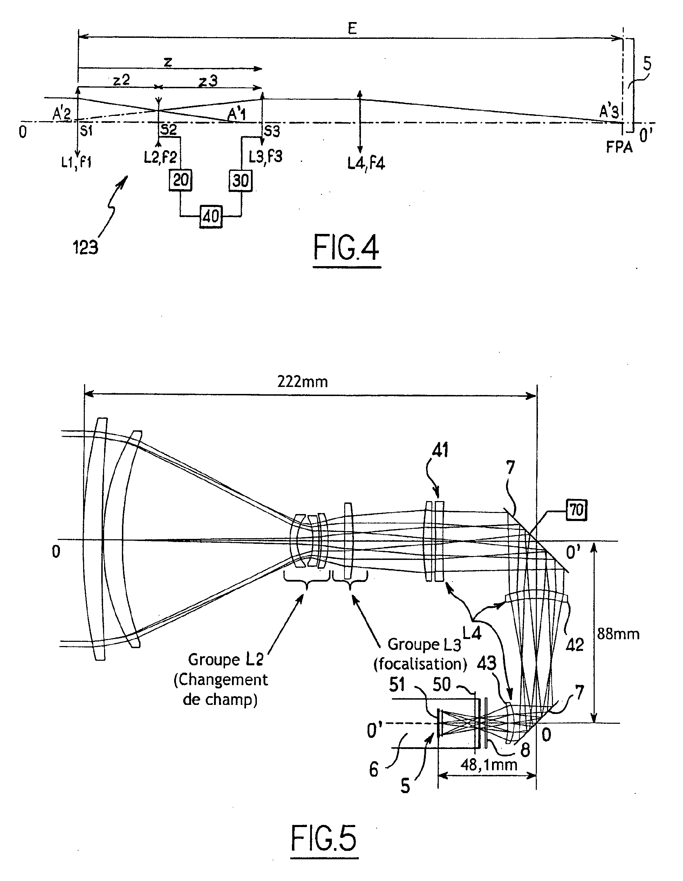

La figure 4 représente schématiquement l'architecture optique fonctionnelle d'une caméra d'observation d'une scène, selon l'invention, dans laquelle le groupe L30 de la figure 1 est scindé en deux éléments, à savoir un groupe L3 compensateur et un module imageur L4.

La caméra présente une zone de mise au point.

L'architecture de la caméra comporte ainsi les groupes L2 et L3, mobiles sur l'axe optique OO'.

L2 est un groupe divergent (c'est à dire à focale négative) appelé variateur, et L3 est un groupe convergent (c'est à dire à focale positive) appelé compensateur.

L'ensemble des groupes L2 et L3 forme ainsi un module 123 modificateur de champ optique, le module modificateur étant apte à faire varier la valeur du champ optique pour assurer la fonction zoom optique de la caméra.

Le module 123 modificateur comporte préférentiellement un groupe frontal L1, fixe. Le module modificateur 123 constituent préférentiellement, mais non limitativement, un groupe afocal de grossissement variable.

Très avantageusement, le module modificateur 123 est afocal.

On entend dans la présente description par « afocal » que le module 123 n'a pas de distance focale (le module 123 donne alors une image à l'infini d'un objet placé à l'infini), ou alors une distance focale extrêmement longue. Ainsi, le module 123 a distance-focale minimale de 30 000 mm (30 m) pour la focale la plus longue de la caméra.

La zone de mise au point est comprise entre l'infini et une distance de l'ordre de la dizaine de mètres par rapport à l'objectif.

Selon l'invention, le module modificateur 123 forme d'un plan objet situé dans la zone de mise au point dans la scène une image intermédiaire à l'infini, de sorte que le module est afocal selon la définition précédente, c'est-à-dire qu'il n'a pas de distance focale, ou une distance focale très longue (supérieure à une distance de l'ordre de 30 m).

L'afocalité permet tout d'abord d'éviter la présence de zones mortes dans l'image sur toute la plage de distances focales de la caméra.

De plus, l'afocalité permet de maintenir la mise au point lors d'une variation du champ de la caméra. En effet, le module modificateur 123 formant une image intermédiaire à l'infini, le module imageur, qui reste fixe, forme une image de l'image intermédiaire dans son plan focal pour toutes les valeurs de champ.

Ensuite, l'afocalité du module modificateur permet un découplage de la fonction de chaque groupe optique composant le module.

Le déplacement du groupe optique divergent (le variateur) permet de faire varier la distance focale de la caméra. Le déplacement du groupe optique convergent (le compensateur) permet de maintenir l'image focalisée sur un plan de focalisation fixe, à savoir matrice du détecteur, lorsque la température ambiante varie et lorsque la focale varie.

Les déplacements des groupes en fonction du champ, de la distance de focalisation et de la température de fonctionnement sont régis, comme on l'explique un peu plus loin, par des lois mathématiques simples, compatibles d'un traitement numérique en temps réel.

Cette propriété permet un pilotage par asservissements numériques à partir de deux motorisations indépendantes, et l'implantation de fonctionnalités valorisantes au niveau de la caméra, telle qu'une fonction de télémétrie intégrée.

Le groupe L3 est mobile sur l'axe optique OO' et focalise l'image A'3 à distance paraxiale proche ou égale à l'infini. La relation ci-dessus (Equ 3) est de ce fait toujours vérifiée, quelles que soient la température et la distance de focalisation dans l'espace de la scène à observer. Il n'y a pas de zone morte dans la plage accessible de focales.

Le module imageur L4, fixe sur l'axe OO', permet notamment de focaliser l'image dans le plan focal souhaité, à savoir la matrice d'un détecteur 5 matriciel apte à détecter un rayonnement infrarouge. Il assure également le transport de la pupille, de façon à la conjuguer sur l'écran refroidi 50 du détecteur. Cette pupille est positionnée sur le groupe frontal pour la plus grande focale.

Le module imageur L4 peut lui-même être constitué de plusieurs sous ensembles optiques, de manière à assurer le transport d'image et de pupille. Il peut également inclure, comme on le verra par la suite des miroirs de coudage, afin d'optimiser l'encombrement de la caméra au volume mécanique disponible.

La focale de la caméra est donnée par la relation :

$$F(z_2) = m_2(z_2) \cdot \frac{f_1 \cdot f_4}{f_3}$$

Pour obtenir un ratio R entre la focale longue et la focale courte du zoom de la caméra, le groupe divergent L2 doit couvrir la plage de grandissements

$$[\frac{1}{-\sqrt{R}} \; ; -\sqrt{R}\,]$$

A chaque position de L2, il existe une position de L3 qui récupère la focalisation à l'infini. La plage complète de focales est couverte par des courses continues des deux groupes L2 et L3 mobiles.

Dans l'architecture proposée, les lois de déplacement des deux groupes L2 et L3 sur l'axe optique OO' répondent à des modèles génériques polynomiaux.

Les variables d'entrées sont :

- F : la distance focale de la caméra ;
- T : la température du milieu dans lequel est placée la caméra ;
- D : La distance de focalisation dans l'espace de la scène.

Les lois de déplacements donnant les positions z2 et z3 des groupes L2 et L3 sont donc :

$$z_2(F,T,D) = \sum_{i=0}^{n} C_{2,i}(T) \cdot (\frac{1}{F})^i$$

$$z_3(F,T,D) = z_2(F,T,D) + \sum_{j=0}^{m} (C_{3,j}(T) + \frac{k_{3,j}}{D}) \cdot F^j \qquad \text{(Equ 4)}$$

Dans ces relations, les coefficients $C_{2,i}(T)$ et $C_{3,j}(T)$ sont linéairement dépendants de la température (prise de préférence à proximité du groupe frontal L1). Les coefficients $k_{3,j}$ sont des constantes, indépendantes de la température

Les valeurs des coefficients $C_{2,i}(T)$, $C_{3,j}(T)$ et $k_{3,j}$ dépendent des dispersions de fabrication, et doivent être déterminées par calibration sur chaque caméra. Le nombre de positions de calibration et les ordres n et m d'interpolation sont définis en fonction de la précision recherchée.

En d'autres termes, la position du variateur est calculée à partir d'un polynôme au moins d'ordre 1, en fonction de l'inverse de la focale, les coefficients de ce polynôme étant linéairement dépendants de la température.

La position relative du compensateur par rapport à la position du variateur étant calculée à partir d'un polynôme au moins d'ordre 1 en fonction de la focale, les coefficients de ce polynôme sont linéairement dépendants de la température et de l'inverse de la distance de focalisation.

Les polynômes sont très avantageusement au plus d'ordre 4.

La focalisation à distance finie est assurée par déplacement du groupe L3 uniquement.

L'architecture optique proposée conduit à des lois de déplacement des groupes mobiles compatibles d'un pilotage par asservissements numériques.

Chaque groupe optique L2 ou L3 mobile est intégré dans une mécanique de déplacement/guidage comportant respectivement un moteur 20 ou un moteur 30, associée à un module électronique 40 de recopie de position. Chaque groupe est pilotable par le module électronique 40, apte également à assurer l'asservissement numérique en vitesse ou en position. Le module 40 est relié au moteur 20 de pilotage du groupe L2 et relié au moteur 30 de pilotage du groupe L3. Le module 40 est apte à commander les moteurs 20 et 30, et comporte également des moyens de calcul.

L'asservissement est réalisé en vitesse ou en position, sur les consignes calculées à partir des lois des relations (Equ 4).

L'asservissement en position consiste à rallier dans un temps minimal des positions discrètes de focale et/ou de distance de focalisation.

L'asservissement en vitesse consiste à passer, de façon continue et sans perte d'image, d'une position de focale à une autre en suivant une loi ergonomique de variation de la focale en fonction du temps. La netteté des images est conservée sur le plan de focalisation initial.

Bien entendu, inversement, à partir des positions des groupes mobiles L2 et L3 (information de recopie de position), il est possible de calculer les valeurs courantes de la focale et de la distance de focalisation. L'architecture optique proposée conduit à des lois polynomiales compatibles d'un traitement numérique en temps réel.

Ces informations peuvent être transmises par la caméra à un dispositif de traitement externe, par l'intermédiaire d'une liaison série.

Le champ FOV, associé à un point donné de l'image, est calculable à partir des positions z2 et z3 courantes des groupes L2 et L3. En effet, pour une distance de focalisation infinie, la valeur du champ ne dépend que de la position du groupe L2. De plus, pour focaliser à distance finie, seul le groupe L3 est déplacé. Mais dans le cas où la distance de focalisation n'est pas l'infini, la valeur de champ à l'infini doit être corrigée par une loi linéaire en fonction de la position du groupe L3, par rapport à sa position à l'infini.

$$FOV(T, z_2, z_3) = (1 + a \cdot (z_3 - z_3(\infty))) . \sum_{i=0}^{n} D_{2,i}(T) \cdot z_2^{\,i}$$

Le coefficient a résulte d'un calcul théorique.

Les coefficients $D_{2,i}(T)$ sont déterminés avec les mêmes données de calibration que celles utilisées pour les coefficients $C_{2,i}(T)$.

La distance D de focalisation est calculable à partir de la position courante z3 de L3, par rapport à la position pour une focalisation à l'infini.

F est la focale correspondant à la position z2 du groupe L2 pour une distance de focalisation à l'infini.

$$D = \frac{\sum_{j=0}^{m} k_{3,j} F^{j}}{z_3 - z_3(\infty)} \quad \text{(Equ 5)}$$

La loi de (Equ 5) permet de calculer, grâce au module 40 formant également moyens de calcul, la distance d'une cible dans la scène à partir de la position courante mesurée du groupe L3.

La mise au point sur la cible peut s'effectuer par un réglage manuel ou par l'intermédiaire d'un autofocus par traitement d'image.

La distance de la caméra à la scène sur laquelle s'effectue la mise au point est avantageusement délivrée par une liaison série ou par un affichage en incrustation sur la vidéo, sans avoir recours à un télémètre extérieur à la caméra.

Par ailleurs, les moteurs indépendants 20 et 30 des groupes mobiles L2 et L3 permettent de présenter au détecteur 5 une image défocalisée de la scène. L'image défocalisée uniforme, qui correspond à une température moyenne de la scène observée, peut périodiquement être présentée pour uniformiser entre elles les réponses des pixels du détecteur 5. Cette fonctionnalité économise une motorisation supplémentaire pour un obturateur.

Le diaphragme d'ouverture est conjugué sur le groupe frontal pour la plus longue focale F de la caméra. La conjugaison minimise alors le diamètre, la masse et le coût de réalisation du groupe frontal.

La conjugaison du diaphragme sur le groupe frontal conduit à un rapport de la focale du groupe optique constitué des lentilles 41 et 42 sur la focale du groupe 43 ayant une valeur supérieure à 4.

EXEMPLE D'UN ZOOM DE RAPPORT X20 POUR CAMERA MATRICIELLE 3-5 $\mu$m

La figure 5 montre un exemple, en lentilles réelles en longue focale, d'une architecture selon l'invention appliquée au développement d'une caméra de focale continûment variable entre 21 mm et 420 mm (soit un rapport x 20) ouvert à F/4.

La caméra est associée à un détecteur 5 matriciel refroidi sensible dans la bande spectrale 3.7 à 4.8 $\mu$m. Le détecteur comporte un écran refroidi 50. Un cryostat 6 permet de refroidir l'écran 50 du détecteur.

La caméra doit opérer à pleines performances dans la plage de températures [ -40°C, +70°C].

Dans cette application particulière, la distribution de focales des différents groupes est la suivante, à une température de 20°C :

$$f_1 = 113.14\,mm$$

$$f_2 = -11.89\,mm$$

$$f_3 = 76.02\,mm$$

$$f_4 = 70.38\,mm$$

La formule optique comprend dix lentilles, dont trois surfaces asphériques et une surface asphéro-diffractive.

Le module imageur L4 est constitué de trois groupes de lentilles 41, 42, et 43 et de deux miroirs 7 de coudage.

L'encombrement a été adapté au volume alloué par un coudage en U, réalisé par deux miroirs 7, disposés à 45° par rapport à l'axe optique OO'. L'un des miroirs peut être, grâce à des moyens de déplacement 70, motorisé ou monté sur cales piézoélectrique pour déplacer de façon dynamique l'axe optique OO', afin de permettre une stabilisation d'axe, un sur-échantillonnage, etc.

La caméra comporte également préférentiellement une lame 8 plane à faces parallèles, inclinée et mobile en rotation autour de l'axe optique OO' en amont du détecteur 5, pour créer un décalage de l'axe optique. L'inclinaison et l'épaisseur de la lame 8 sont choisies pour créer un décalage de l'axe optique équivalent à un ½ pixel du détecteur. Ceci est un dispositif de microbalayage permettant d'augmenter la résolution de l'image.

Pour permettre une bonne indépendance de fonctionnement de la caméra vis à vis de la température, le groupe frontal L1 du zoom est constitué de deux lentilles convergentes, la lentille extérieure étant sphérique, préférentiellement en ZnS, la lentille interne étant asphéro-diffractive, préférentiellement en ZnSe.

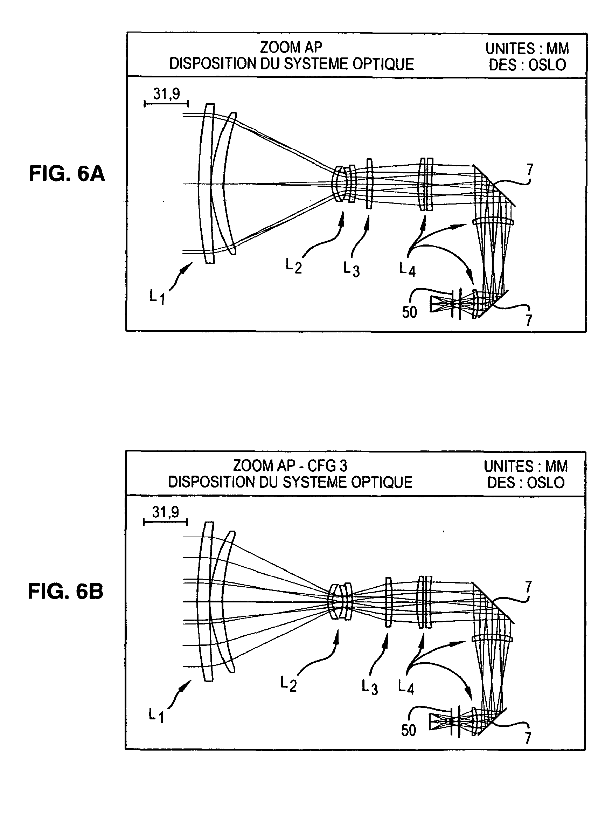

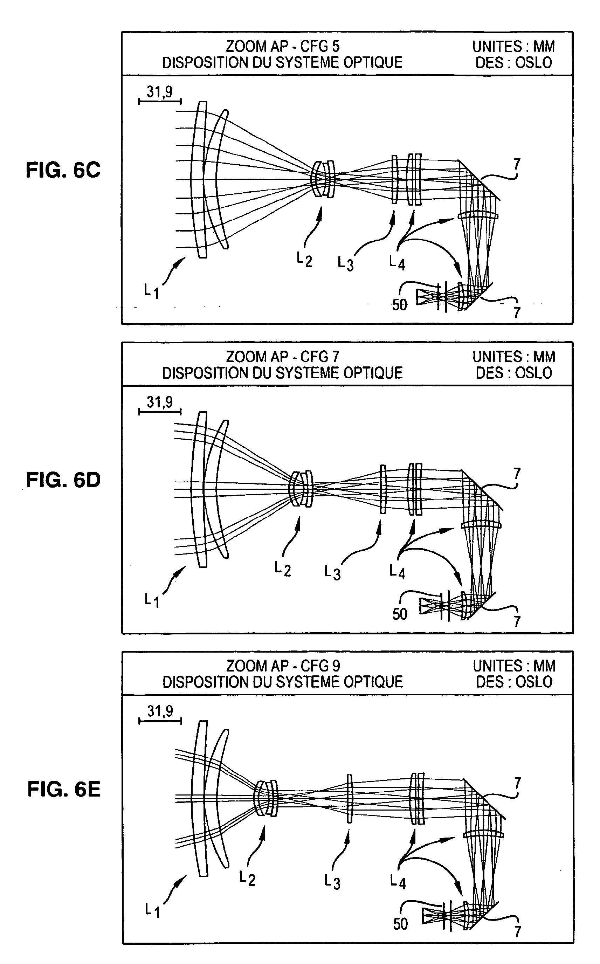

Les figures 6A à 6E représentent les trajets du rayonnement infrarouge dans une caméra pour différentes valeurs de focales. On constate que la pupille de la caméra est toujours conjuguée sur l'écran refroidi 50 du détecteur.

Dans toutes les positions de focales, la qualité optique après tolérancement (c'est à dire incluant les dispersions de fabrication à la fois optiques et mécaniques) est compatible des performances de FTM (Fonction de Transfert de Modulation) reprises dans le tableau 1.

Tableau 1

| Fréquences (paires de ligne /mm) | MTF sur l'axe OO' | MTF en bord de champ horizontal |
|---|---|---|
| 7.5 | 0.76 | 0.73 |
| 15 | 0.55 | 0.51 |
| 22.5 | 0.37 | 0.33 |
| 30 | 0.22 | 0.19 |

Les lois de déplacement des groupes mobiles sont établies par calibration individuelle de chaque caméra en neuf positions de focales pour trois températures différentes, puis par interpolation polynomiale d'ordre 4, en fonction de la focale ou de l'inverse de la focale, entre les positions de calibration.

Le procédé de calibration consiste à déterminer la position des deux groupes mobiles L2 et L3 (information électrique de recopie de position), associée à une mesure optique précise de la focale (ou du champ) et un relevé du capteur de température. La position du groupe L3 est optimisée pour obtenir la FTM maximale.

La précision globale des lois de déplacement (incluant les erreurs de mesures et d'interpolation) sur toute la plage de focale et dans toute la gamme de températures est

$\pm$ 5 $\mu$m pour le groupe L2

$\pm$ 30 $\mu$m pour le groupe L3

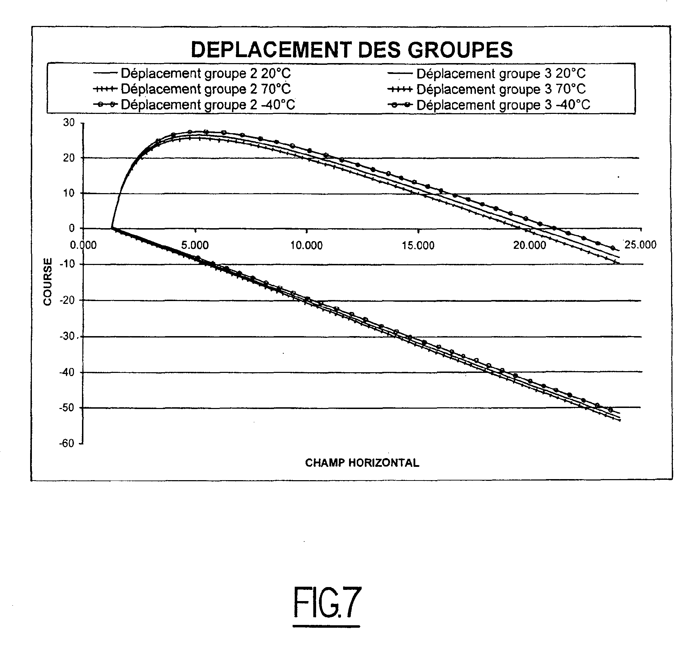

Ces erreurs sont relatives aux déplacements théoriques calculés pour garantir l'optimum des performances (voir figure 7).

Les lois de positionnements sont inversibles et permettent de fournir en temps réel une recopie numérique précise de la position de focale (précision avec une erreur inférieure à 1 %) et de la distance de focalisation courante (précision avec une erreur inférieure à 2%).

On rappelle que des exemples de positions des groupes L2 et L3 sont donnés par les figures 6A à 6E et par le graphe de la figure 7.

**Revendications**

1. Caméra infrarouge d'observation d'une scène, comportant un zoom optique présentant une zone de mise au point dans la scène et comportant :

   - un détecteur (5) matriciel comportant
   un écran refroidi (50),
   une matrice (51) apte à détecter un rayonnement infrarouge ;
   - un module (123) modificateur de distance focale de la caméra, le module modificateur étant apte à faire varier la distance focale de la caméra pour assurer la fonction zoom optique de la caméra, le module modificateur (123) étant constitué de trois groupes de lentilles, à savoir

un groupe (L1) optique frontal convergent, fixe sur un axe optique (OO') de la caméra,
un groupe (L2) optique variateur divergent, mobile sur l'axe optique (OO') de la caméra ; et
un groupe (L3) optique compensateur convergent, mobile sur l'axe optique (OO') de la caméra , et
- un module imageur (L4) apte à assurer, pour toutes les valeurs de distance focale de la caméra :

d'une part la focalisation du rayonnement infrarouge sur la matrice (51) du détecteur (5), et
d'autre part la conjugaison de la pupille de la caméra sur l'écran refroidi (50) du détecteur,

ladite caméra étant **caractérisée en ce que** la position du groupe (L3) optique compensateur est déterminée par rapport à la position du groupe (L2) optique variateur de sorte que le module modificateur (123) forme d'un plan objet situé dans la zone de mise au point dans la scène une image intermédiaire à l'infini, et **en ce qu'**elle présente une ouverture numérique constante sur toute la plage de variation de la distance focale de la caméra.

**2.** Caméra selon la revendication 1, comportant un moteur (20) de pilotage du groupe (L2) optique variateur et un moteur (30) de pilotage du groupe (L3) optique compensateur, chaque moteur étant relié à un module électronique (40) de pilotage, chaque pilotage des groupes optiques (L2, L3) s'effectuant par asservissement numériques.

**3.** Caméra selon l'une des revendications 1 ou 2, dans laquelle le module imageur (L4) est constitué de trois groupes de lentilles (41, 42, 43) et de deux miroirs (7) de coudage.

**4.** Caméra selon la revendication 3, dans laquelle l'un des miroirs est mobile, pour déplacer de façon dynamique l'axe optique (OO')

**5.** Caméra selon l'une des revendications 1 à 4, comportant une lame (8) plane à faces parallèles, inclinée et mobile en rotation autour de l'axe optique (OO') en amont du détecteur (5) pour créer un décalage de l'axe optique.

**6.** Caméra selon l'une des revendications 1 à 5, comportant un module (40) comportant des moyens de calcul, apte à

- calculer la variation de la distance focale de la caméra et à maintenir la focalisation du rayonnement infrarouge sur la matrice (51) du détecteur (5) et le transport de la pupille de la caméra sur l'écran refroidi du détecteur,
- commande le déplacement indépendant des deux groupes optiques,
la position de variateur étant calculée à partir d'un polynôme au moins d'ordre 1, en fonction de l'inverse de la focale, les coefficients de ce polynôme étant linéairement dépendants de la température ;
la position relative du compensateur par rapport à la position du variateur étant calculée à partir d'un polynôme au moins d'ordre 1 en fonction de la focale, les coefficients de ce polynôme sont linéairement dépendants de la température et de l'inverse de la distance de focalisation.

**7.** Caméra selon la revendication 6, dans laquelle le module (40) est apte à calculer la distance de la caméra à la scène à partir de la recopie de position associée au moteur (30) du groupe optique compensateur.

**8.** Caméra selon l'une des revendications 1 à 7, dans laquelle l'ouverture numérique est égale à la focale divisée par quatre, à savoir F/4.

## Claims

**1.** An infrared camera for observing a scene, including an optical zoom having a focusing area in the scene and including:

- an array detector (5) including
a cooled screen (50),
an array (51) capable of detecting infrared radiation;
- a module (123) for modifying the focal distance of the camera, the modifier module being capable of varying the focal distance of the camera in order to ensure the optical zoom function of the camera, the modifier module (123) being constituted of three groups of lenses, namely
a convergent front optical group (L1), fixed on an optical axis (OO') of the camera,
a divergent variator optical group (L2), mobile on the optical axis (OO') of the camera; and
a convergent compensator optical group (L3), mobile on the optical axis (OO') of the camera; and
- an imager module (L4) capable of ensuring, for all the focal distance values of the camera:

the focusing of the infrared radiation on the array (51) of the detector (5), on the one hand, and
the conjugation of the pupil of the camera on the cooled screen (50) of the detector, on the other hand, said camera being **characterized in that** the position of the compensator optical group (L3) is determined relatively to the position of the variator optical group (L2) such that the modifier module (123) forms from an object plane situated in the focusing area in the scene an intermediate image at infinity, and **in that** it has a constant numerical aperture over the whole range of variation of the focal distance of the camera.

2. The camera according to claim 1, including a motor (20) for driving the variator optical group (L2) and a motor (30) for driving the compensator optical group (L3), each motor being connected to an electronic drive module (40), each driving of the optical groups (L2, L3) being carried out by digital servocontrol.

3. The camera according to one of claims 1 or 2, wherein the imager module (L4) consists of three groups of lenses (41, 42, 43) and of two bending mirrors (7).

4. The camera according to claim 3, wherein one of the mirrors is mobile, in order to dynamically displace the optical axis (OO').

5. The camera according to one of claims 1 to 4, including a tilted planar plate (8) with parallel faces, rotationally mobile around the optical axis (OO'), upstream from the detector (5), in order to generate a shift of the optical axis.

6. The camera according to one of claims 1 to 5, including a module (40) including computation means, capable of

   - computing the variation of the focal distance of the camera and maintaining the focusing of the infrared radiation on the array (51) of the detector (5) and transporting the pupil of the camera on the cooled screen of the detector,
   - controlling the independent displacement of both optical groups,
   the position of the variator being computed from a polynomial at least of order 1, depending on the inverse of the focal length, the coefficients of this polynomial being linearly dependent on temperature;
   the relative position of the compensator relatively to the position of the variator being computed from a polynomial of at least order 1 depending on the focal length, the coefficients of this polynomial are linearly dependent on the temperature and on the inverse of the focusing distance.

7. The camera according to claim 6, wherein the module (40) is capable of computing the distance from the camera to the scene from the recopying position associated with the motor (30) of the compensator optical group.

8. The camera according to one of claims 1 to 7, wherein the numerical aperture is equal to the focal length divided by four, i.e. F/4.

**Patentansprüche**

1. Infrarotkamera zur Beobachtung einer Szene, die einen optischen Zoom mit einem Scharfstellungsbereich in der Szene aufweist und Folgendes umfasst:

   - einen Matrixdetektor (5), der Folgendes umfasst:

     einen gekühlten Schirm (50),
     eine Matrix (51), die dafür eingerichtet ist, Infrarotstrahlung zu detektieren;

   - ein Veränderungsmodul (123) für die Brennweite der Kamera, wobei das Veränderungsmodul dafür eingerichtet ist, die Brennweite der Kamera zu verändern, um die optische Zoomfunktion der Kamera sicherzustellen, wobei das Veränderungsmodul (123) aus drei Linsengruppen gebildet ist, und zwar:

     einer Gruppe (L1) der konvergenten Eingangsoptik, die feststehend auf einer optischen Achse (OO') der Kamera ist,
     einer Gruppe (L2) der divergenten Einstellungsoptik, die beweglich auf der optischen Achse (OO') der Kamera ist; und
     einer Gruppe (L3) der konvergenten Kompensationsoptik, die beweglich auf der optischen Achse (OO') der Kamera ist, und

- ein Bildgebungsmodul (L4), das dafür eingerichtet ist, für alle Brennweitenwerte der Kamera Folgendes sicherzustellen:

zum einen die Fokussierung der Infrarotstrahlung auf der Matrix (51) des Detektors (5), und
zum anderen die Konjugation der Pupille der Kamera auf dem gekühlten Schirm (50) des Detektors,

wobei die Kamera **dadurch gekennzeichnet ist, dass** die Position der Gruppe (L3) der Kompensationsoptik relativ zur Position der Gruppe (L2) der Einstellungsoptik derart festgelegt ist, dass das Veränderungsmodul (123) aus einer Objektebene, die sich im Scharfstellungsbereich in der Szene befindet, ein Zwischenbild im Unendlichen bildet, und dadurch, dass sie über den gesamten Veränderungsbereich der Brennweite der Kamera eine konstante numerische Apertur hat.

2. Kamera nach Anspruch 1, die einen Motor (20) zur Steuerung der Gruppe (L2) der Einstellungsoptik und einen Motor (30) zur Steuerung der Gruppe (L3) der Kompensationsoptik hat, wobei jeder der Motoren mit einem elektronischen Steuerungsmodul (40) verbunden ist, wobei jede der Steuerungen der optischen Gruppen (L2, L3) durch eine digitale Regelung ausgeführt wird.

3. Kamera nach einem der Ansprüche 1 oder 2, bei der das Bildgebungsmodul (L4) aus drei Linsengruppen (41, 42, 43) und zwei Umlenkspiegeln (7) gebildet wird.

4. Kamera nach Anspruch 3, bei der einer der Spiegel beweglich ist, um auf dynamische Weise die optische Achse (OO') zu verschieben.

5. Kamera nach einem der Ansprüche 1 bis 4, die dem Detektor (5) vorgeschaltet ein ebenes Plättchen (8) mit parallelen Flächen umfasst, das geneigt und drehend beweglich um die optische Achse (OO') ist, um eine Verschiebung der optischen Achse zu erzeugen.

6. Kamera nach einem der Ansprüche 1 bis 5, die ein Modul (40) umfasst, das ein Berechnungsmittel umfasst, das dafür eingerichtet ist:

- die Veränderung der Brennweite der Kamera zu berechnen und die Fokussierung der Infrarotstrahlung auf der Matrix (51) des Detektors (5) sowie die Übertragung der Pupille der Kamera auf den gekühlten Schirm des Detektors beizubehalten,
- die unabhängige Verschiebung der zwei optischen Gruppen zu steuern,

wobei die Position der Einstellungsoptik ausgehend von einem Polynom mit wenigstens dem Grad 1 in Abhängigkeit vom Kehrwert der Brennweite berechnet wird, wobei die Koeffizienten des Polynoms linear von der Temperatur abhängen;
und die Position der Kompensationsoptik relativ zur Position der Einstellungsoptik ausgehend von einem Polynom mit wenigstens dem Grad 1 in Abhängigkeit von der Brennweite berechnet wird, wobei die Koeffizienten des Polynoms linear von der Temperatur und vom Kehrwert der Fokussierungsentfernung abhängen.

7. Kamera nach Anspruch 6, bei der das Modul (40) dafür eingerichtet ist, die Entfernung von der Kamera zur Szene ausgehend von der zum Motor (30) der Gruppe der Kompensationsoptik gehörenden Positionsfestlegung zu berechnen.

8. Kamera nach einem der Ansprüche 1 bis 7, bei der die numerische Apertur gleich der Brennweite geteilt durch vier, also F/4, ist.

## FIG.1

f1 = 132.9 ; f2 = -20.7 ; f3 = 43.99
A'2A'3 = 4xf3  avec m2 =-1 and m3(1)=-1,04 ; m3(2) = -0,96

20

position de L2 et L30par rapport à L1

focale en mm

— L2 ( bessel 1 )

-o-o- L2 (bessel 2)

- - - L30(bessel 1)

++++ L30(bessel 2)

## FIG.2

**T= - 40°C**
**f1 = 132.96 ; f2 = -20.7 ; f3 = 43.99**
**à m2 =m3=-1   A'2A'3 = 4xf3**

L2 ( bessel 1 )

L2 (bessel 2)

L30(bessel 1)

L30(bessel 2)

## FIG.3A

**T= +20°C**
**f1 = 132.34 ; f2 = -20.516 ; f3 = 43.78**

L2 ( bessel 1 )

L2 (bessel 2)

L30(bessel 1)

L30(bessel 2)

## FIG.3B

**T= +70°C**
**f1 = 131,78 ; f2 = -20.359 ; f3 = 43.59**

L2 ( bessel 1 )

L2 (bessel 2)

L30(bessel 1)

L30(bessel 2)

## FIG.3C

EP 2 158 511 B1

FIG.4

Groupe L2
(Changement
de champ)

Groupe L3
(focalisation) 43

FIG.5

15

**FIG. 6A**

ZOOM AP
DISPOSITION DU SYSTEME OPTIQUE

UNITES : MM
DES : OSLO

31,9

L₁  L₂  L₃  L₄  50  7  7

**FIG. 6B**

ZOOM AP - CFG 3
DISPOSITION DU SYSTEME OPTIQUE

UNITES : MM
DES : OSLO

31,9

L₁  L₂  L₃  L₄  50  7  7

**FIG. 6C**

ZOOM AP - CFG 5
DISPOSITION DU SYSTEME OPTIQUE
UNITES : MM
DES : OSLO

31,9

L₁    L₂    L₃    L₄    7    50    7

**FIG. 6D**

ZOOM AP - CFG 7
DISPOSITION DU SYSTEME OPTIQUE
UNITES : MM
DES : OSLO

31,9

L₁    L₂    L₃    L₄    7    50    7

**FIG. 6E**

ZOOM AP - CFG 9
DISPOSITION DU SYSTEME OPTIQUE
UNITES : MM
DES : OSLO

31,9

L₁    L₂    L₃    L₄    7    50    7

FIG.7

**EP 2 158 511 B1**

## RÉFÉRENCES CITÉES DANS LA DESCRIPTION

**Documents brevets cités dans la description**

- US 6091551 A

- JP 2002014283 A